# EUROPÄISCHE PATENTSCHRIFT

(11) **EP 0 459 335 B1**
(45) Veröffentlichungstag und Bekanntmachung des Hinweises auf die Patenterteilung: **18.09.1996**
(21) Anmeldenummer: 91108550.4
(22) Anmeldetag: 25.05.1991
(51) Int. Cl.: G01M 3/36

(54) **Verwendung eines Verfahrens und einer Anordnung zur Leckageprüfung**
Use of a method and device for testing leakage
Utilisation d'un procédé et dispositif pour l'examen de fuite

(30) Priorität: 01.06.1990 DE 4017693
(43) Veröffentlichungstag der Anmeldung: 04.12.1991
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- EP-A- 0 355 699
- DE-A- 3 312 963
- JP-A- 277 633
- JP-A- 5 944 637
- US-A- 4 188 819
- US-A- 4 747 298
- US-A- 4 747 299
- US-A- 4 899 574
- US-A- 4 901 558
- US-A- 4 922 746
- US-A- 5 033 287

## Beschreibung

Die vorliegende Erfindung betrifft eine Verwendung eines Verfahrens nach Anspruch 1 sowie die Verwendung einer Anordnung nach Anspruch 11.

Die US-A-4 901 558 ist gerichtet auf eine Technik zur Prüfung der Verschlussdichtung (seal) an Behältnissen. Grundsätzlich wird dabei abgestützt auf den sogenannten "bulging wall test", bei welchem zwischen Behältnisinnerem und Behältnisäusserem ein von innen nach aussen gerichteter Druckgradient gebildet wird. Es wird erkannt, dass bei diesen Tests, insbesondere wenn Leckagen, offensichtlich an der zu prüfenden Verbindungsstelle, sehr klein sind und schnell selbstdichtend vom Inneren her verschlossen werden, eine unendlich lange Messzeit erforderlich ist, um mit diesen bekannten Verfahren ein solches Leck trotzdem zu detektieren.

Zur Lösung dieses Problems schlägt die US-A-4 901 558 vor, während des Messzyklus eine Vielzahl verschiedener Messungen bezüglich der Unterdruckatmosphäre ausserhalb der Behältnisse und der Ausbuchtungsmasse der Behältniswandung auszuwerten.

Auch die US-A-4 747 299 ist auf die Prüfung eines "seals" an Behältnissen gerichtet. Hierfür wird über dem zu prüfenden "seal" eine von aussen nach innen gerichtete Druckdifferenz erzeugt. Das Problem der Selbstdichtung ist nicht angesprochen.

Die vorliegende Erfindung setzt sich zum Ziel, dieses Problem zu lösen, was durch die eingangs erwähnten Verwendungen erreicht wird.

Die Erfindung geht von der prinzipiellen Erkenntnis aus, dass die erwähnten Behältnisse mit selbstdichtender Neigung, sei dies bedingt durch den Wandungsaufbau oder durch das Füllgut, nur dann zuverlässig und einfach leckagegetestet werden können, wenn die Ventilwirkung an solchen Behältnisleckstellen ausgenützt wird und mithin während des Tests eine Druckdifferenz angelegt wird, welche von aussen nach innen gerichtet ist, wie dies an sich aus der US-A-4 747 299 bekannt ist.

Wird nun, wie dies auf erstes Zusehen hin angenommen werden könnte, dies dadurch realisiert, dass das Behältnis als Ganzes in eine Atmosphäre eingeführt wird, die bezüglich Behältnisinnendruck auf erhöhten Druck gebracht wird, so resultiert, dass sich die flexiblen Wandungsabschnitte des Behältnisses einbuchten und sich innerhalb des Behältnisses im wesentlichen der gleiche Druck einstellt wie ausserhalb des Behältnisses: Damit wäre die erwähnte Charakteristik nicht ausgenützt.

Deshalb wird das aus der genannten Schrift an sich bekannte Vorgehen beibehalten, nämlich das Behältnisinnenvolumen vergrössert, dabei der Druck an mindestens einem aussen liegenden Wandungsabschnitt des Behältnisses grösser gehalten als der minimale Druck, der sich bei der Volumenvergrösserung des dichten. Behältnisses im Innern ergibt. Damit wird ausgenützt, dass, saugbalgähnlich, während der Volumenvergrösserung am Behältnis, am genannten Wandungsabschnitt eine von aussen nach innen gerichtete Druckdifferenz entsteht, so dass das Medium dann durch ein Leck, vom Füllgut und vom Aufbau der Wandung unbeeinträchtigt, nach innen strömt und gegebenenfalls das Leck eher aufweitet: Die Ventilcharakteristik derartiger Lecks wird mithin ausgenützt.

Die Volumenvergrösserung des Behältnisses wird in einer ersten Art der erfindungsgemässen Verwendung durch Anlegen eines bezüglich des Anfangsdruckes im Innern des Behältnisses tieferen Druckes an mindestens einem flexiblen Wandungsabschnitt erzeugt. Damit wird dieser Wandungsabschnitt ausgebuchtet, und an dem mit dem Medium beaufschlagten Wandungsabschnitt, sei dieser nun flexibel oder nicht, tritt die erwähnte Wirkung auf.

In einer weiteren Art der genannten Verwendung gemäss Anspruch 7 wird die Volumenvergrösserung durch mechanisch auseinandergezogene Zugorgane realisiert, welche beispielsweise und bevorzugterweise saugnapfähnlich an Wandungsabschnitten befestigt werden.

Als Messgrösse, die mit einem vorgegebenen Verhalten oder einem vorgegebenen Schwellwert verglichen wird zum Entscheid, ob Leckagen vorgegebener Maximalgrösse vorliegen oder nicht, wird vorgeschlagen, gemäss Anspruch 3 den Weg, sei dies nun der Ausbuchtungsweg oder gegebenenfalls auch ein Einbuchtungsweg eines flexiblen Wandungsabschnittes des Behältnisses zu erfassen oder dessen Geschwindigkeit oder dessen Beschleunigung.

Im weiteren wird gemäss Anspruch 5 vorgeschlagen, den Druck im Medium oder die Spannung in einer flexiblen Behältniswandpartie, wie mittels Dehnmessstreifen, zu erfassen. Ist in dem mit dem Medium kontaktierten Behältniswandungsabschnitt ein Leck, so erfolgt, wie erwähnt wurde, aufgrund der Saugbalgwirkung, ein Einströmen des Mediums in das Behältnis, womit sich, bei geschlossener Mediumsatmosphäre, darin eine Druckänderung ergibt, die, wie erwähnt, als Messgrösse erfasst werden kann.

Da im weiteren, entsprechend gegebenen Behältnissen und deren Einsatzzweck, maximal zulässige Lecks vorgegeben werden, dabei eine Leckage Null nie erreicht wird, kann beim vorgeschlagenen Vorgehen nicht verhindert werden, dass durch toleriert kleine Lecks Medium und insbesondere ein Gasmedium ins Behältnis gelangt.

Um bei diesbezüglich heiklen Füllgütern, wie Lebensmitteln, eine durch den Test bewirkte Kontamination des Behältnisinhaltes mit einem Prüfgas als Medium zu verhindern, wird vorgeschlagen, nach dem Wortlaut von Anspruch 8 vorzugehen.

In höchst einfacher Art und Weise wird der Druck des Mediums gleich dem Behältnisinnen-Anfangsdruck gewählt, ist dieser gleich Atmosphärendruck, mithin auf Atmosphärendruck, oder gegebenenfalls höher, gemäss Anspruch 5.

Wie erläutert wurde, bildet ein Leck in einem zur Selbstdichtung neigenden Behältnis oder Behältnis mit Füllgut, bezüglich Strömung, ein Element mit Ventilcharakteristik. Dies wird nun weiter gemäss Wortlaut von Anspruch 9 zu Auswertungszwecken dahingehend ausgenützt, dass eine oszillierende Volumenänderung am Behältnis bewirkt wird, womit je nach dem, ob die momentane Volumenänderung eine Volumenzunahme oder eine Volumenabnahme ist, oszillierende Messgrössen erfasst werden, mit ähnlich wie bei einem Gleichrichtungseffekt unterschiedlichen Signalhalbwellen.

Es werden besonders leckageempfindliche Behältnispartien dem erwähnten Medium ausgesetzt, so beispielsweise Schweissnähte. Dabei ist es aber ohne weiteres möglich, das Leckageverhalten ganzer Behältnisse auf die erwähnte Art und Weise zu testen, indem sequentiell, gemäss Anspruch 6, unterschiedliche, gegebenenfalls alle Wandungsabschnitte des Behältnisses dem erwähnten Medium ausgesetzt werden.

Bevorzugte Ausführungsvarianten der erwähnten erfindungsgemässen Anordnungs Verwendung sind in den Ansprüchen 12 bis 18 spezifiziert.

Die Erfindung wird anschliessend beispielsweise anhand von Figuren erläutert.

Es zeigen:
- Fig. 1: eine Prinzipdarstellung des erfindungsgemässen vorgehens.
- Fig. 2: schematisch eine erfindungsgemässe erste Verwendungsvariante für das Testen quaderförmiger Behältnisse, wie von Orangensaft- oder Milchpackungen,
- Fig. 3: eine weitere Verwendungs variante der Anordnung gemäss Fig. 2,
- Fig. 4: eine weitere Verwendungsvariante,
- Fig. 5: eine vierte Verwendungsvariante,
- Fig. 6: schematisch und ebenfalls für das Testen quaderförmiger Behältnisse, wie von Milch- oder Orangensaftpackungen, eine fünfte Variante
- Fig. 7a: eine Darstellung analog zu der von Fig. 1 mit in
- Fig. 7b: bei Wechselbeanspruchung sich ergebender Messgrösse.

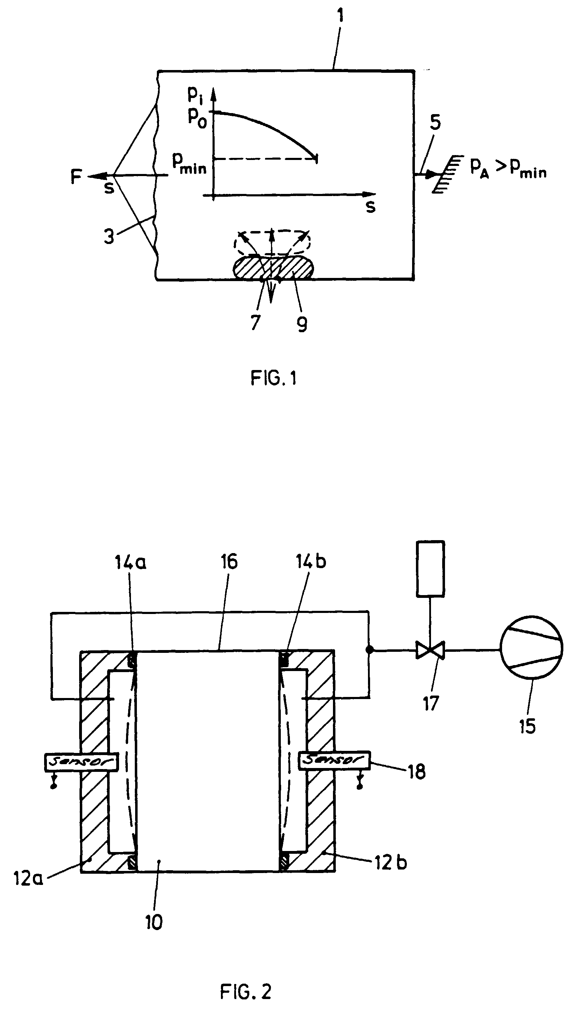

In Fig. 1 ist schematisch ein Behältnis 1 mit einer Wandung 3 dargestellt, die aus einem flexiblen, im wesentlichen unelastischen Material, wie aus Karton, besteht. Das Behältnis 1 sei gefüllt und weise einen Innendruck p₀ auf. Es wird das Behältnis 1 mit der flexiblen Wandung 3 in volumenvergrössernder Art und Weise beansprucht, wie z.B. dargestellt einerseits an einem Widerlager 5, der flexiblen Wandung 3 gegenüberliegend, gehaltert und an der flexiblen Wandung 3, wie mit der Kraft F dargestellt, expandiert.

Es sei vorerst ein dichtes Behältnis 1 betrachtet. Durch die Volumenvergrösserung sinkt, wie schematisch dargestellt ist, der anfänglich p₀ betragende Innendruck pᵢ ab. Ist nun irgendwo in der Wandung des Behältnisses 1, sei dies an der flexiblen Wand 3 oder den hier formstabil dargestellten, weiteren Wandungsabschnitten, wie in stark übertriebenem Masse dargestellt, ein Leck 7 vorhanden und ist, um das Behältnis 1, ein Medium unter Druck p_{A} , bevorzugterweise ein Gas, vorgesehen, der grösser ist als der bei vorgesehener Volumenvergrösserung sich minimal einstellende Behältnisinnendruck pₘᵢₙ, so wird ab dem Moment, an welchem der Behältnisinnendruck pᵢ unter den Aussendruck p_{A} fällt, das bevorzugterweise gasförmige Medium durch das Leck 7 in das Behältnis 1 eingesaugt.

Ein schematisch dargestelltes Füllgutpartikel 9 oder ein am Leck 7 loser Teil der Wandung wird durch diese Strömung (gestrichelt dargestellt) ins Behältnisinnere bewegt und beeinträchtigt das Einströmen des erwähnten gasförmigen Mediums nicht.

Da die flexible Wand 3 ähnlich einem Federelement einen kraftabhängigen Weg s zurücklegt, dessen Verlauf abhängig ist davon, ob ein Leck vorhanden ist oder nicht, wird mit einem nicht dargestellten Messfühler, z.B. der Ausbuchtungsweg s des flexiblen Wandungsabschnittes 3 oder, bei vorgegebenem Weg, die hierzu notwendige Kraft F, die Geschwindigkeit des Wandungsabschnittvorschubes oder dessen Beschleunigung erfasst.

Eine weitere Messignalbereitstellungsmöglichkeit ist die Erfassung der Spannung im Wandungsabschnitt 3, beispielsweise mit Hilfe von Dehnmessstreifen (DMS).

Eine weitere Messignalerfassung besteht darin, dann, wenn das aussen liegende Medium mit dem Druck p_{A} in einer geschlossenen Kammer vorgesehen wird, das durch das Einströmen dieses Mediums durch das Leck 7 bewirkte Abfallen des Druckes p_{A} zu erfassen.

In Fig. 2 ist, schematisch, eine erste Ausführungsvariante einer nach dem erfindungsgemässen Prinzip bzw. dem in Fig. 1 Erläuterten arbeitenden Testanordnung dargestellt. Ein hier beispielsweise kubusförmiges Behältnis 10, wie ein bekanntes Kartonbehältnis für Milch, Orangensaft etc., wird an zwei Flächen, beispielsweise gegenüberliegenden, mit Saugbacken 12a bzw. 12b kontaktiert. Die Backen 12 sind büchsenförmig ausgebildet und weisen je an ihren Rändern umlaufende Dichtungen 14a bzw. 14b auf, die sich dicht an die jeweilige Wandung des Behältnisses anlegen.

Nach Anlegen der Saugbacken 12 an die entsprechenden Wandungsabschnitte des Behältnisses 10 werden erstere mittels einer Vakuumpumpe 15, über ein Steuerventil 17, evakuiert. Diese Evakuierung bewirkt, wie gestrichelt dargestellt, ein Ausbuchten der von den Backen 12 überdeckten Wandungsabschnitte.

Die nicht von den Saugbacken 12 abgedeckten Wandungspartien, generell mit 16 bezeichnet, liegen, im dargestellten Beispiel, an Normalatmosphäre, gegebenenfalls in einer eigens dafür vorgesehenen Kammer in einer Schutzgasatmosphäre, wie aus Sterilluft oder Stickstoff, und es ist an diesen Flächen 16, dass Lecks mittels eines oder mehrerer der schematisch dargestellten Sensoren 18 erfasst werden.

Es eignen sich verschiedenartige Sensoren, wie Weg-, Kraft-, Geschwindigkeits-, Beschleunigungs- oder Druck- bzw. Spannungssensoren, für die Bereitstellung eines Messignals, und da solche Sensoren, wie kapazitive oder induktive Annäherungssensoren, opto-elektronische Sensoren etc., bekannt sind und dem Fachmann ohne weiteres klar ist, wo die jeweiligen Sensortypen an der schematisch dargestellten Anordnung vorzusehen sind, wird im weiteren auf die eingesetzte Messignalerfassungstechnik nicht eingegangen.

Bei der Ausführungsvariante gemäss Fig. 2 werden, beispielsweise im Durchlaufbetrieb anfallende Behältnisse 10, mittels der Backen 12 von ihrer Standfläche, z.B. einem Förderband, angehoben und dann ausschliesslich durch die Backen 12 gehaltert und sonst freischwebend getestet. Hierzu können die beiden Bakken 12 federnd gegeneinander gespannt sein, um die Behältnisse 10, vor Anlegen des Vakuums, zwischen den Saugbacken 12, zu haltern.

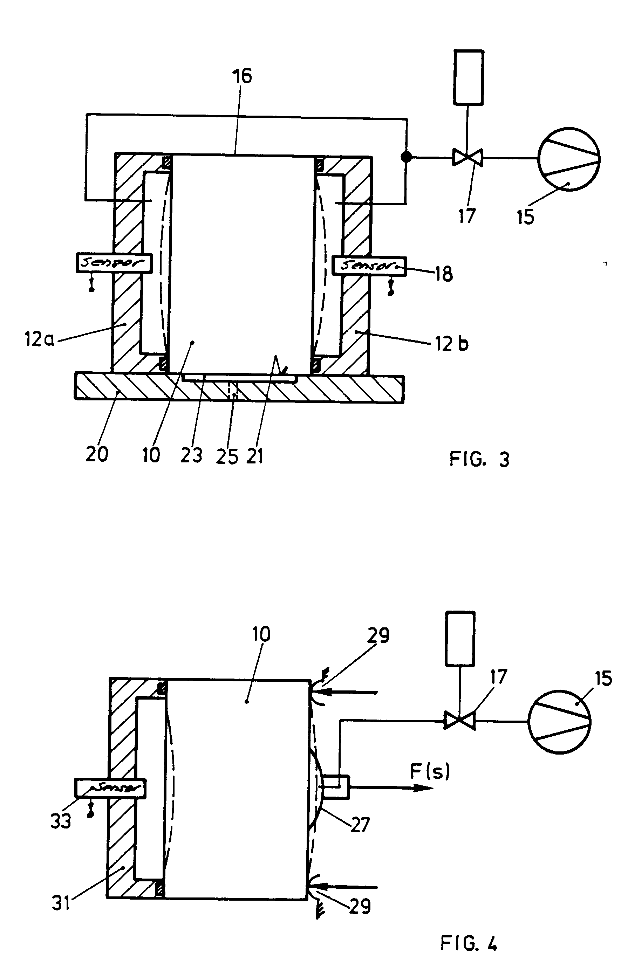

In Fig. 3 ist, ausgehend von der Ausführungsvariante von Fig. 2, eine Ausführungsvariante dargestellt, bei der das zu testende, z.B. kubusförmige Behältnis 10 auf einer Standfläche verbleibt. Gleiche Elemente, wie bei der Ausführungsvariante von Fig. 2 verwendet, sind mit denselben Positionsziffern versehen.

Im Unterschied zur Ausführungsvariante gemäss Fig. 2 ruht während des Tests mittels der Backen 12 das Behältnis 10 auf einer Standfläche 20. Damit aber auch die Standfläche 21 des Behältnisses 10 leckagegeprüft wird, ist in die Standfläche 20 eine Einnehmung 23 eingearbeitet, welche, wie gestrichelt bei 25 dargestellt, vorzugsweise mit der Umgebung kommuniziert, so dass darin die gleichen Druckverhältnisse herrschen.

Auch bei der Ausführungsvariante gemäss Fig. 3 werden z.B. Annäherungsfühler 18 kapazitiver oder induktiver Bauart vorgesehen, um bei der Volumenvergrösserung des zu prüfenden Behältnisses die Charakteristik festzustellen, beispielsweise bei welchem Unterdruck die gestrichelt eingetragene Wandungsausbuchtung ein bestimmtes Mass erreicht, gegebenenfalls auch Einbuchtungen an den der Normalatmosphäre ausgesetzten Wandungsabschnitten. Alternativ zu diesen Sensoren 18 werden, wie erwähnt wurde, opto-elektronische Fühler, Drucksensoren oder Dehnmessstreifen eingesetzt.

Bei der Ausführungsvariante gemäss Fig. 3 kann weiter als Mass bzw. leckageanzeigende Messgrösse die durch die Bohrung 25 eingesaugte Luftmenge verwendet werden.

Bei der Ausführungsvariante gemäss Fig. 4 wird zur Volumenvergrösserung am zu prüfenden Behältnis 10, wiederum als Beispiel einem quaderförmigen Behältnis, eine Saugglocke 27 angelegt und, wie mit dem Pfeil F dargestellt, damit die Wandung mechanisch zugbeaufschlagt. Mittels Widerlagern, wie bei 29 schematisch dargestellt, werden beispielsweise die Kantenpartien der zugbeanspruchten Wandungsfläche widergelagert. Es wird beispielsweise der Weg-/Kraftverlauf F(s) oder die Beschleunigung der Flächenausbuchtung (gestrichelt dargestellt) oder deren Geschwindigkeit als Leckageindikationsmessgrösse erfasst.

Im weiteren kann, wie links in Fig. 4 dargestellt, an mindestens einer der nicht mit der Saugbacke 27 beaufschlagten Behältniswandungen eine Messbacke 31 vorgesehen sein, beispielsweise, wie dargestellt analog zu den Backen 12 aus den Fig. 2 und 3, und es wird darin z.B. der sich aufgrund der Zugbeanspruchung F und der sich einbuchtenden Wandung einstellende, reduzierte Druck mit einem schematisch dargestellten Drucksensor 33 erfasst. Auch hier kann anstelle eines Drucksensors ein Positionssensor für die sich einbuchtende Wandung vorgesehen sein, wie ein kapazitiver oder induktiver Fühler.

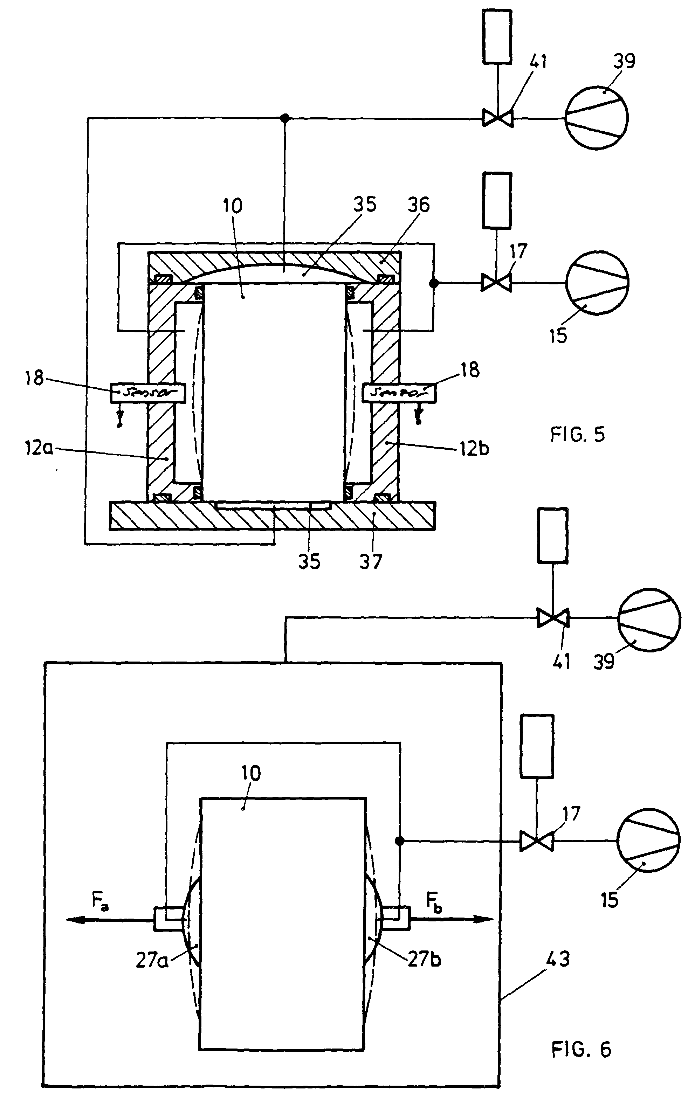

Fig. 5 zeigt eine Anordnung, bei der, ausgehend von einer Messanordnung gemäss den Fig. 2 oder 3, anstelle atmosphärischen Druckes, ein Ueberdruck angelegt wird. Zusätzlich zu den in den Fig. 2 bzw. 3 dargestellten Saugbacken 12, mit den Sensoren 18, werden die nicht zugbeanspruchten Behältniswandungen in Kammern 35 eingebracht, gebildet durch Backen 36 bzw. die Standfläche 37. Diese Kammern 35 werden mittels einer Druckmediumsquelle 39, über ein Ventil 41, druckbeaufschlagt, während die Saugbacken 12 in bereits erläuterter Art und Weise über die Vakuumpumpe 15, Ventil 17 evakuiert werden.

Durch die Beaufschlagung der nicht zugbeanspruchten Behältnispartien mit einem Druck, der höher als Atmosphärendruck ist, wird die Messempfindlichkeit der Anordnung erhöht, d.h. es bedarf einer kleineren Volumenvergrösserung, um ein an den mit Ueberdruck beaufschlagten Behältniswandungen bestehendes Leck zu öffnen und Einströmen von Medium - das druckbeaufschlagte Gas - zu bewirken.

Auch hier können anstelle der Positionssensoren, wie bei 18 dargestellt, in den Kammern 35 Drucksensoren vorgesehen sein, um einen Druckabfall zu registrieren, wenn, durch eine Leckage, Druckmedium aus den Kammern 35 ins Innere des Behältnisses 10 eingesaugt wird.

Während bei den Ausführungsvarianten, wie sie anhand der Fig. 2 bis 4 dargestellt wurden, auch im Falle einer noch tolerablen Leckage, Umgebungsluft in das Behältnis 10 eingesaugt wird, aufgrund der Saugbalgwirkung des Behältnisses, und mithin das empfindliche Füllgut auch eines als dicht erkannten Behältnisses durch eingesaugte Umgebungsluft beeinträchtigt werden kann, ergibt sich bei der Ausführungsvariante gemäss Fig. 5 die Möglichkeit, die Ueberdruckkammern 35 mit einem sterilen Gas, wie mit Sterilluft oder Stickstoff, zu beaufschlagen. Damit wird verhindert, dass geringste Mengen ins Behältnisinnere eingesaugten Druckmediums das Füllgut beeinträchtigen können.

Sollen auch die Ausführungsvarianten gemäss den Fig. 2 bis 4 unter "Schutzgasatmosphäre" betrieben werden, so werden dort die als der Atmosphäre ausgesetzt gezeigten Wandungspartien in entsprechend ausgebildeten Kammern unter Sterilgasbeaufschlagung getestet, oder es wird die ganze Anordnung in Sterilgasatmosphäre betrieben.

Dies ist bei der Anordnung gemäss Fig. 6 vorgekehrt. In Weiterausbildung der in Fig. 4 dargestellten Anordnung werden hier an sich gegenüberliegenden Flächen des zu testenden Behältnisses 10 je Saugnäpfe 27a bzw. 27b angesetzt, und mit Zugkräften Fₐ bzw. F_{b} wird das Behältnis 10 expandiert.

Wie bereits in Fig. 4, werden die Saugnäpfe 27 von einer Evakuierungspumpe 15 über ein Ventil 17 vakuumbeaufschlagt. Hier wird die ganze Anordnung, wie schematisch dargestellt, in einer Schutzgaskammer 43 angeordnet, welche über eine Druckquelle 39, Ventil 41 mit einem Schutzgas, beispielsweise Sterilluft oder Stickstoff, mit einem Druck beaufschlagt wird, welcher über dem atmosphärischen Druck liegt.

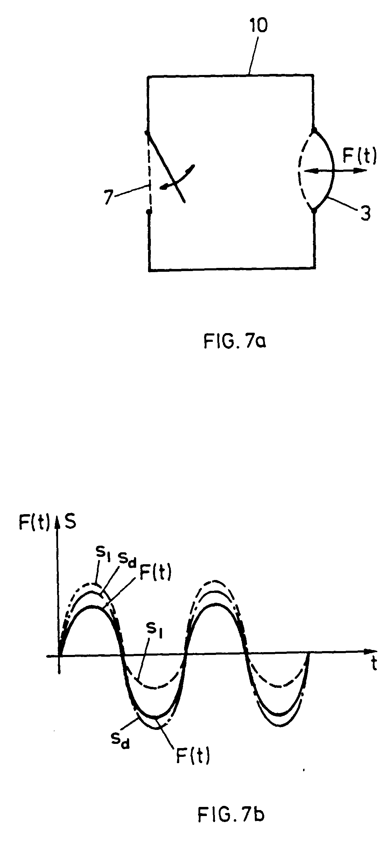

In Fig. 7 ist, schematisch, nochmals ein zu testendes Behältnis 10 dargestellt, mit einer flexiblen Wandungspartie 3 und einem Leck 7. Das Leck 7 ist hier, entsprechend seiner Ventilcharakteristik, durch einen Klappdeckel 7a dargestellt. Wird mit der Beanspruchungskraft F die flexible Wandungspartie 3 volumenvergrössernd gestreckt, so wird aufgrund des Einfliessens von Umgebungsmedium ins Behältnis 10 der Leckageverschluss 7a in die ausgezogen dargestellte Position geöffnet.

Wird, umgekehrt, die Beanspruchung F nach innen ausgeübt, so ergibt sich eine Erhöhung des Innendruckes, und es wird die Leckagepartie 7a in die gestrichelt dargestellte, geschlossene Position rückgetrieben.

Dies kann zu einer weiteren Messtechnik ausgenützt werden, wie sie beispielsweise in Fig. 7b dargestellt ist. Es wird beispielsweise eine oszillierende Kraft F(t) mit gleichbleibender Amplitude angelegt, gemäss Fig. 7a. Ist das Behältnis 10 dicht, so ergibt sich ein im wesentlichen dem Kraftverlauf folgender Wegverlauf S_{d} der flexiblen Wandungspartie 3. Ist ein Leck 7 gemäss Fig. 7a vorhanden, so ergibt sich, aufgrund seiner Ventilcharakteristik, je in den Beanspruchungskrafthalbwellen ein unterschiedlicher Wegverlauf, wie bei s₁ dargestellt. Bei Volumenvergrösserung wird, bei gleicher Amplitude, im allgemeinen ein grösserer Weg der Partie 3 beobachtet als bei Volumenreduktion (Kompression).

Das Wechselsignalverhalten solcher Lecks kann selbstverständlich auch mit den vormals erwähnten Messensoren erfasst und ausgewertet werden.

Die vorgestellte Messtechnik bzw. die vorgestellte Messanordnung eignet sich insbesondere für die Leckageprüfung von Behältnissen mit flexibler, nicht elastischer Wandung, wie von unter dem Begriff "Tetrapak" bekannten Getränkepackungen, sowie für Vakuumpackungen, Folienbeutel etc.

## Patentansprüche

1. Verwendung eines Verfahrens zur Leckageprüfung eines geschlossenen Behältnisses mit mindestens einem flexiblen Wandungsabschnitt, bei dem das Innenvolumen des Behältnisses mit Hilfe des flexiblen Wandungsabschnittes vergrössert wird und eine dadurch bewirkte Aenderung einer Messgrösse als Leckageindikation ausgewertet wird und ein zu prüfender Wandungsabschnitt des Behältnisses aussen in einer Atmosphäre eines Mediums angeordnet wird, dessen Druck grösser ist als der aufgrund der Volumenvergrösserung des Behältnisses sich in seinem Innern ergebende Druck, für ein Behältnis mit einer Neigung zur Selbstdichtung vom Behältnisinnern her.

2. Verwendung nach Anspruch 1, wobei die Volumenvergrösserung durch Anlegen eines bezüglich des Anfangsdruckes im Innern des Behältnisses tieferen Druckes an mindestens einem flexiblen Wandungsabschnitt des Behältnisses erzeugt wird.

3. Verwendung nach einem der Ansprüche 1 oder 2, wobei als Messgrösse, an einem flexiblen Wandungsabschnitt des Behältnisses, dessen Weg, dessen Geschwindigkeit oder dessen Beschleunigung gemessen wird.

4. Verwendung nach einem der Ansprüche 1 bis 3, wobei als Messgrösse der Druck im Medium oder die Spannung in einem flexiblen Wandungsabschnitt erfasst wird.

5. Verwendung nach einem der Ansprüche 1 bis 4, wobei der Druck des Mediums gleich dem Behältnisinnendruck vor Vergrösserung des Volumens oder höher gesetzt wird.

6. Verwendung nach einem der Ansprüche 1 bis 5, wobei sequentiell unterschiedliche Wandungsabschnitte mit der Neigung zur Selbstdichtung der Atmosphäre mit dem Medium beaufschlagt werden.

7. Verwendung nach einem der Ansprüche 1 bis 6, wobei die Volumenvergrösserung durch Befestigen eines Zugorganes an mindestens einem flexiblen Wandungsabschnitt und mechanischen Zug am Organ erzeugt wird, dabei das Behältnis gegenüber widergelagert wird.

8. Verwendung nach einem der Ansprüche 1 bis 7, wobei das Behältnis während der Prüfung mindestens entlang wesentlicher Wandungsabschnitte in einer Sterilgasatmosphäre, wie in einer Sterilluft- oder einer Stickstoffatmosphäre, gehaltert wird.

9. Verwendung nach einem der Ansprüche 1 bis 8, wobei eine oszillierende Volumenänderung am Behältnis bewirkt wird.

10. Verwendung nach einem der Ansprüche 1 bis 9 an Kartonbehältnissen für Fruchtsäfte, Milchgetränke oder an Behältnissen mit mehrschichtigem Wandungsaufbau.

11. Verwendung einer Anordnung zur Leckageprüfung eines geschlossenen Behältnisses mit mindestens einem flexiblen Wandungsabschnitt (3) und mit
- einem Zugbeanspruchungsorgan (12, 27), das, am Behältnis (1, 10) lokal, am flexiblen Wandungsabschnitt (3) anbringbar ist, zur Vergrösserung des Innenvolumens des Behältnisses (1),
- einem Halteorgan (5, 12, 29), das bei Zugbeanspruchung am flexiblen Wandungsabschnitt das Behältnis (1, 10) widerhaltern kann,
- einem Messfühler (18) zur Erfassung einer sich aufgrund der Zugbeanspruchung ändernden Messgrösse, die zur Leckageindikation auswertbar ist, und wobei ein zu prüfender Wandungsabschnitt des Behältnisses (1) aussen in einer Atmosphäre eines Mediums angeordnet werden kann, dessen Druck grösser ist als der aufgrund der Volumenvergrösserung des Behältnisses (1) in seinem Innern sich ergebende Druck,
für die Leckageprüfung eines Behältnisses mit einer Neigung zur Selbstdichtung vom Behältnisinnern her.

12. Verwendung nach Anspruch 11, wobei das Zugbeanspruchungsorgan eine dicht an den flexiblen Wandungsabschnitt applizierbare Saugbacke (12a, 12b) ist.

13. Verwendung nach einem der Ansprüche 11 oder 12, wobei mindestens eine mit einer Druckquelle (39) beaufschlagbare Kammeranordnung (36) vorgesehen ist zur Bildung einer dichten Kammer (35) mit einem Wandungsabschnitt des Behältnisses (10), um über diesen Wandungsabschnitt eine erhöhte Druckdifferenz aufzubauen.

14. Verwendung nach einem der Ansprüche 11 bis 13, wobei das Zugbeanspruchungsorgan (12, 27) mit einer Antriebsanordnung verbunden ist, welche eine zeitabhängige Zugbeanspruchung (F(t)) bewirkt.

15. Verwendung nach einem der Ansprüche 11 bis 14, wobei der Messfühler ein Positionsfühler für einen Behältniswandungsabschnitt, wie ein kapazitiver oder induktiver Positionsfühler, ist oder ein optoelektronischer Messfühler oder ein Drucksensor oder ein Dehnmessstreifen.

16. Verwendung nach einem der Ansprüche 11 bis 15, wobei das Zugbeanspruchungsorgan ein Saugnapf (27) ist, der mit einem Zugantriebsorgan (F) gekoppelt ist.

17. Verwendung nach Anspruch 14, wobei die Antriebsanordnung eine oszillierende Beanspruchung bewirkt.

18. Verwendung nach einem der Ansprüche 11 bis 17 an Kartonbehältnissen für Fruchtsäfte, Milchgetränke oder an Behältnissen mit mehrschichtigem Wandungsaufbau.

## Claims

1. Use of a method for testing for leakage of a closed container with at least one flexible wall section, wherein the internal volume of the container is increased by means of the flexible wall section and a variation in a measured quantity which is thereby brought about is evaluated as a leakage indication, and a wall section of the container which is to be tested is disposed externally in an atmosphere of a medium whose pressure is greater than the pressure resulting in the interior of the container on account of the increase in its volume, for a container with a tendency to self-sealing from its interior.

2. Use according to claim 1, wherein the increase in volume is produced by applying a pressure which is lower than the initial pressure in the interior of the container to at least one flexible wall section of the container.

3. Use according to one of claims 1 and 2, wherein the deflection, the speed or the acceleration of a flexible wall section of the container is measured at this section as the measured quantity.

4. Use according to one of claims 1 to 3, wherein the pressure in the medium or the stress in a flexible wall section is detected as the measured quantity.

5. Use according to one of claims 1 to 4, wherein the pressure of the medium is set to be equal to or higher than the internal pressure of the container before the volume is increased.

6. Use according to one of claims 1 to 5, wherein different wall sections with a tendency to self-sealing with respect to the atmosphere are sequentially acted upon by the medium.

7. Use according to one of claims 1 to 6, wherein the increase in volume is produced by attaching a pulling member to at least one flexible wall section, and mechanical traction is produced at the member, the container being supported with respect to this.

8. Use according to one of claims 1 to 7, wherein the container is held in a sterile gas atmosphere, such as in a sterile air or a nitrogen atmosphere, during the test, at least along substantial wall sections.

9. Use according to one of claims 1 to 8, wherein an oscillating change in volume is brought about at the container.

10. Use according to one of claims 1 to 9 on cardboard containers for fruit juices, milk drinks or on containers with a multilayer wall structure.

11. Use of an arrangement for testing for leakage of a closed container with at least one flexible wall section (3) and with
- a tensile stress member (12, 27) which can be attached locally to the container (1, 10), to the flexible wall section (3), to increase the internal volume of the container (1),
- a holding member (5, 12, 29), which can support the container (1, 10) when a tensile stress is applied to the flexible wall section,
- a measuring sensor (18) for detecting a measured quantity which varies on account of the tensile stress and which can be evaluated for leakage indication, and wherein a wall section of the container (1) which is to be tested can be disposed externally in an atmosphere of a medium whose pressure is greater than the pressure resulting in the interior of the container (1) on account of the increase in its volume,
for testing for leakage of a container with a tendency to self-sealing from its interior.

12. Use according to claim 11, wherein the tensile stress member is a suction jaw (12a, 12b) which can be applied sealingly to the flexible wall section.

13. Use according to one of claims 11 and 12, wherein at least one chamber arrangement (36) which can be acted upon by a pressure source (39) is provided to form a tight chamber (35) with a wall section of the container (10) in order to create an increased pressure differenceaccross this wall section.

14. Use according to one of claims 11 to 13, wherein the tensile stress member is connected to a drive arrangement which gives rise to a time-dependent tensile stress (F(t)).

15. Use according to one of claims 11 to 14, wherein the measuring sensor is a position sensor for a container wall section, such as a capacitive or an inductive position sensor, or an opto-electronic measuring sensor or a pressure sensor or a strain gauge.

16. Use according to one of claims 11 to 15, wherein the tensile stress member is a suction cap (27) which is coupled to a traction drive member (F).

17. Use according to claim 14, wherein the drive arrangement gives rise to an oscillating stress.

18. Use according to one of claims 11 to 17 on cardboard containers for fruit juices, milk drinks or on containers with a multilayer wall structure.

## Revendications

1. Utilisation d'un procédé pour contrôler l'étanchéité d'un récipient fermé comportant au moins une section de paroi flexible, selon lequel on augmente le volume interne du récipient à l'aide de la section de paroi flexible, on analyse comme indication de fuite la variation d'une grandeur de mesure ainsi provoquée et on dispose une section de paroi à contrôler du récipient à l'extérieur, dans une atmosphère d'un agent dont la pression est supérieure à la pression résultant, à l'intérieur du récipient, de l'augmentation de volume de celui-ci, pour un récipient qui tend à l'auto-étanchéité à partir de l'intérieur du récipient.

2. Utilisation selon la revendication 1, selon laquelle on produit l'augmentation de volume en appliquant contre au moins une section de paroi flexible du récipient une pression inférieure à la pression initiale régnant à l'intérieur du récipient.

3. Utilisation selon la revendication 1 ou 2, selon laquelle on mesure comme grandeur de mesure, sur une section de paroi flexible du récipient, la course, la vitesse ou l'accélération de ladite section.

4. Utilisation selon l'une des revendications 1 à 3, selon laquelle on enregistre comme grandeur de mesure la pression régnant dans l'agent ou la tension présente dans une section de paroi flexible.

5. Utilisation selon l'une des revendications 1 à 4, selon laquelle on choisit pour l'agent une pression égale à la pression interne du récipient avant l'augmentation de volume, ou supérieure à cette pression.

6. Utilisation selon l'une des revendications 1 à 5, selon laquelle différentes sections de paroi qui tendent à l'auto-étanchéité de l'atmosphère sont sollicitées successivement à l'aide de l'agent.

7. Utilisation selon l'une des revendications 1 à 6, selon laquelle l'augmentation de volume est produite grâce à la fixation d'un organe de traction à au moins une section de paroi flexible, et à une traction mécanique au niveau de cet organe, le récipient étant en appui à l'opposé.

8. Utilisation selon l'une des revendications 1 à 7, selon laquelle pendant le contrôle, on maintient le récipient, au moins le long de sections de paroi essentielles, dans une atmosphère de gaz stérile telle qu'une atmosphère d'air stérile ou d'azote.

9. Utilisation selon l'une des revendications 1 à 8, selon laquelle on provoque une variation de volume oscillante au niveau du récipient.

10. Utilisation selon l'une des revendications 1 à 9 pour des récipients en carton pour jus de fruits ou boissons lactées, ou pour des récipients ayant une structure de paroi multicouche.

11. Utilisation d'un dispositif pour contrôler l'étanchéité d'un récipient fermé comportant au moins une section de paroi flexible (3), comprenant
- un organe de contrainte de traction (12, 27) qui est apte à être monté localement sur le récipient (1, 10), au niveau de la section de paroi flexible (3) , afin d'augmenter le volume interne du récipient (1),
- un organe de fixation (5, 12, 29) qui peut retenir le récipient (1, 10) lorsqu'une contrainte de traction est exercée au niveau de la section de paroi flexible, et
- un capteur de mesure (18) pour enregistrer une variation, due à la contrainte de traction, d'une grandeur de mesure qui est apte à être analysée pour indiquer une fuite, étant précisé qu'une section de paroi à contrôler du récipient (1) peut être disposée à l'extérieur, dans une atmosphère d'un agent dont la pression est supérieure à la pression résultant, à l'intérieur du récipient (1), de l'augmentation de volume de celui-ci,
pour contrôler l'étanchéité d'un récipient tendant à l'auto-étanchéité à partir de l'intérieur du récipient.

12. Utilisation selon la revendication 11, selon laquelle l'organe de contrainte de traction est une mâchoire formant ventouse (12a, 12b) apte à être appliquée de façon étanche contre la section de paroi flexible.

13. Utilisation selon la revendication 11 ou 12, selon laquelle on prévoit au moins un dispositif de chambre (36) apte à être sollicité à l'aide d'une source de pression (39) et destiné à former une chambre étanche (35) contenant une section de paroi du récipient (10), afin de former sur cette section de paroi une plus grande différence de pression.

14. Utilisation selon l'une des revendications 11 à 13, selon laquelle l'organe de contrainte de traction (12, 27) est relié à un dispositif d'actionnement provoquant une contrainte de traction (F(t)) qui est fonction du temps.

15. Utilisation selon l'une des revendications 11 à 14, selon laquelle le capteur de mesure est un capteur de position pour une section de paroi du récipient, comme un capteur de position capacitif ou inductif, un capteur de mesure électronique optique, un détecteur de pression ou une jauge extensométrique.

16. Utilisation selon l'une des revendications 11 à 15, selon laquelle l'organe de contrainte de traction est une ventouse (27) qui est accouplée à un organe d'actionnement de traction (F).

17. Utilisation selon la revendication 14, selon laquelle le dispositif d'actionnement provoque une contrainte oscillante.

18. Utilisation selon l'une des revendications 11 à 17 pour des récipients en carton pour jus de fruits ou boissons lactées, ou pour des récipients ayant une structure de paroi multicouche.
